# EUROPÄISCHE PATENTSCHRIFT

(11) **EP 2 577 240 B1**
(45) Veröffentlichungstag und Bekanntmachung des Hinweises auf die Patenterteilung: **20.04.2016**
(21) Anmeldenummer: 11713976.6
(22) Anmeldetag: 15.03.2011
(51) Int. Cl.: G01G 21/23, G01G 23/00, G01G 19/44

(54) **VORRICHTUNG ZUM WIEGEN**
APPARATUS FOR WEIGHING
DISPOSITIF DE PESÉE

(30) Priorität: 28.05.2010 DE 102010022440
(43) Veröffentlichungstag der Anmeldung: 10.04.2013
(73) Patentinhaber: seca ag, 4153 Reinach BL 1 (CH)
(72) Erfinder: ASCHKE, Walter, 21149 Hamburg (DE)
(74) Vertreter: Patentanwälte Klickow & Partner Partnerschaftsgesellschaft mbB
(86) Internationale Anmeldenummer: PCT/DE2011/000267
(87) Internationale Veröffentlichungsnummer: WO 2011/147390

(56) Entgegenhaltungen:
- WO-A1-2007/125550
- DE-A1- 10 006 225
- US-A1- 2006 219 445

## Beschreibung

Die Erfindung betrifft Vorrichtung zum Wiegen, die eine Auflagefläche für das zu wiegende Objekt aufweist und bei der die Auflagefläche von einem Auflageelement ausgebildet ist, das von mindestens zwei Tragelementen gegenüber einer Aufstellfläche abstützbar ist, und bei der die Tragelemente relativ zueinander identisch ausgebildet sind, und bei der jedes der Tragelemente von einem Distanzarm mit dem Rahmen verbunden ist und jedes der Tragelemente mindestens eine Wägezelle zur Gewichtserfassung sowie eine Nivelliereinrichtung zur Höhenjustage aufweist.

Typischerweise werden gemäß dem Stand der Technik vier Tragelemente im Bereich eines massiven Rahmens angeordnet und das Auflageelement wird dann auf diesen Rahmen aufgesetzt. Der Rahmen und die Tragelemente werden individuell an die jeweils vorliegende konstruktive Realisierung der konkreten Waage angepaßt. Im Bereich der Tragelemente können Wägezellen zur Gewichtsaufnahme angeordnet sein, die über elektrische Anschlußleitungen mit einer Auswertungseinrichtung verbunden werden.

Aus der WO 2007/125550 ist bereits eine Vorrichtung zum Wiegen bekannt, die eine Auflagefläche für das zu wiegende Objekt aufweist. Die Auflagefläche ist als Oberfläche eines Auflageelementes ausgebildet. Das Auflageelement wird von mindestens zwei Tragelementen gegenüber einer Aufstellfläche abgestützt. Die Tragelemente sind relativ zu einander identisch ausgebildet.

Vergleichbare Vorrichtungen werden auch in der US 2006/219445 sowie der DE 100 06 225 A1 beschrieben.

Für die Produktion von unterschiedlich gestalteten Waagen müssen gemäß dem Stand der Technik eine entsprechende Anzahl von Rahmen mit Tragelementen produziert und bereitgestellt werden. Hieraus resultiert ein entsprechender Aufwand.

Aufgabe der vorliegenden Erfindung ist es, eine Vorrichtung der einleitend genannten Art derart zu konstruieren, dass ein modularer Aufbau unterstützt wird.

Diese Aufgabe wird erfindungsgemäß dadurch gelöst, dass das Tragelement ein Basiselement sowie ein relativ zum Basiselement positionierbares Distanzelement aufweist, dass das Distanzelement mit einem Fuß versehen ist, und dass der Fuß im Bereich seiner dem Distanzelement abgewandten Ausdehnung eine Kontur derart aufweist, dass in einer Mehrzahl von Schwenkpositionierungen des Distanzelementes relativ zum Basiselement eine Wirklinie, die einer Kraftübertragungsrichtung vom Auflageelement zum Basiselement entspricht und einer Wirklinie, die einer Kraftübertragung vom Fuß zu einer Aufstellfläche entspricht, im Wesentlichen gleichgerichtet und ineinander fallend angeordnet sind.

Die relativ zueinander identische Ausbildung der Tragelemente ermöglicht eine universelle Herstellung der Tragelemente mit einer vereinfachten Lagerhaltung und durch die größere Stückzähl verringerten Herstellungskosten. Die Tragelemente können mit einer leichten Rahmenkonstruktion verbunden werden und relativ zum Rahmen in Abhängigkeit von der jeweils vorliegenden konstruktiven Gestaltung der Waage positioniert und fixiert werden.

Für die Durchführung der Höhenjustage wird vorgeschlagen, dass das Tragelement ein Basiselement sowie ein relativ zum Basiselement positionierbares Distanzelement aufweist.

Ein sicheres Aufstellen wird dadurch unterstützt, dass das Distanzelement mit einem Fuß versehen ist.

Eine einfache und zugleich genaue Höhenjustage kann dadurch erfolgen, dass das Distanzelement relativ zum Basiselement verschwenkbar gelagert ist.

Zur Bereitstellung eines Schwenkgelenkes wird vorgeschlagen, dass im Bereich eines das Distanzelement mit dem Basiselement verbindenden Schwenkgelenkes ein elastisches Element angeordnet ist.

Eine jeweilige Schwenkpositionierung kann dadurch vorgegeben werden, daß das Distanzelement von einem Stellelement relativ zum Basiselement positionierbar ist.

Geringe Stellkräfte bei der Durchführung der Schwenkbewegung werden dadurch unterstützt, daß das Stellelement relativ zum Fuß gegenüberliegend zum Schwenkgelenk angeordnet ist.

Zur Festlegung einer Positionierung einer Mehrzahl von Tragelementen relativ zueinander wird vorgeschlagen, daß das Tragelement mit einem Rahmen verbunden ist.

Eine geometrische Anpassung an eine konkrete räumliche Dimensionierung der Waage kann dadurch erfolgen, daß das Tragelement von einem Distanzarm mit dem Rahmen verbunden ist.

Eine hohe Standsicherheit wird dadurch erreicht, daß vier Tragelemente mit dem Rahmen verbunden sind.

Eine Anpaßbarkeit an unterschiedliche Geometrien von unterschiedlichen Waagen wird dadurch unterstützt, daß die Distanzarme relativ zum Rahmen positionierbar angeordnet sind.

Eine Einleitung von Kräften und/oder Momenten in den Rahmen kann dadurch minimiert werden, daß der Fuß im Bereich seiner dem Distanzelement abgewandten Ausdehnung eine Kontur derart aufweist, daß in einer Mehrzahl von Schwenkpositionierungen des Distanzelementes relativ zum Basiselement eine Wirklinie, die einer Kraftübertragungsrichtung vom Auflageelement zum Basiselement entspricht und einer wirklinie, die einer Kraftübertragung vom Fuß zu einer Aufstellfläche entspricht, im Wesentlichen gleichgerichtet und ineinander fallend angeordnet sind.

In den Zeichnungen sind Ausführungsbeispiele der Erfindung schematisch dargestellt. Es zeigen:
- Fig. 1: eine perspektivische Seitenansicht einer Bodenwaage mit auf einer Säule angeordneter Anzeige- und Bedieneinrichtung,
- Fig. 2: eine perspektivische Darstellung von vier Tragelementen, die über Distanzarme mit einem Rahmen verbunden sind,
- Fig. 3: eine perspektivische Darstellung eines Tragelementes,
- Fig. 4: eine Seitenansicht des Tragelementes gemäß Fig. 3 und
- Fig. 5: ein Tragelement gemäß Fig. 4 mit einer veränderten Höhenjustierung.

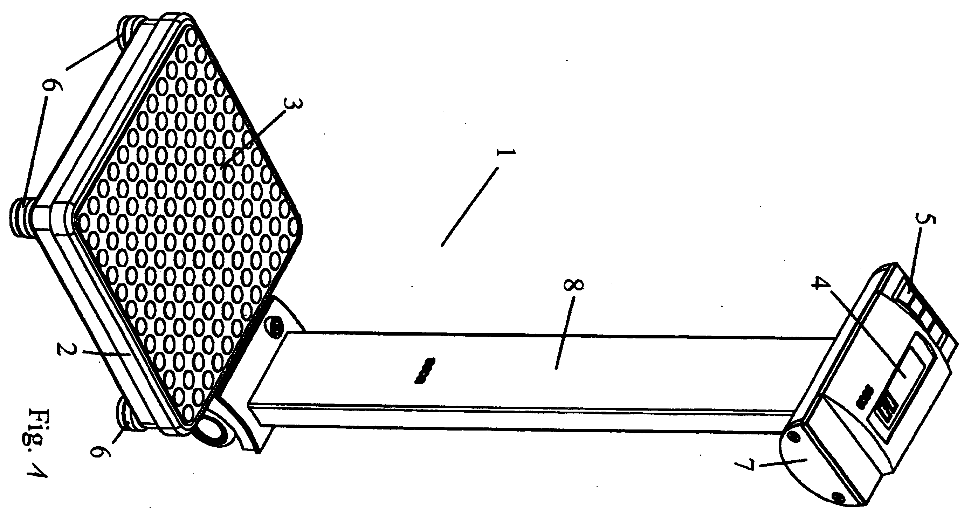

Fig. 1 zeigt eine perspektivische Darstellung einer Waage (1), die als eine Bodenwaage ausgebildet ist. Im Bereich eines Auflageelementes (2) ist eine Auflagefläche (3) vorgesehen, auf die sich die zu wiegende Person bei der Durchführung des Wiegevorgangs stellt. Eine Bedienbarkeit der Waage (1) wird durch ein Display (4) sowie Einstellelemente (5) unterstützt, die im Bereich einer Konsole (7) angeordnet sind. Die Konsole (7) ist auf einer für einen Benutzer angenehmen Höhe angeordnet und wird von einer Säule (8) getragen.

Das Auflageelement (2) wird von Tragelementen (6) relativ zu einer nicht dargestellten Aufstellfläche abgestützt.

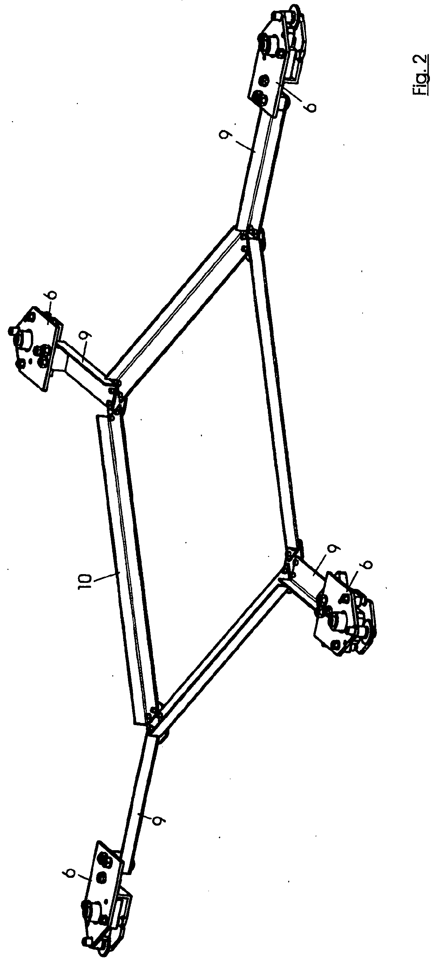

Fig. 2 zeigt eine perspektivische Darstellung von vier Tragelementen (6), die jeweils über Distanzarme (9) mit einem Rahmen (10) verbunden sind. Der Rahmen (10) kann aufgrund der nachstehend noch näher erläuterten Konstruktion der Tragelemente (6) in einer Leichtbauweise konstruiert werden, da keine größeren Kräfte aufgenommen werden müssen. Beim dargestellten Ausführungsbeispiel bestehen der Rahmen (10) sowie die Distanzarme (9) aus einfachen Winkelblechen, die miteinander verschraubt sind.

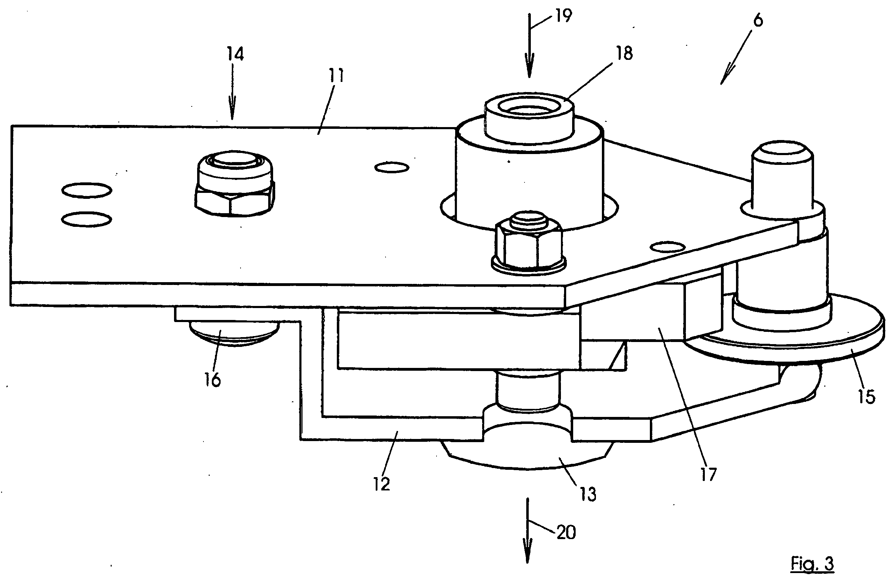

Die perspektivische Seitenansicht in Fig. 3 veranschaulicht den Aufbau der Tragelemente (6). Das Tragelement (6) besitzt ein Basiselement (11) sowie ein relativ zum Basiselement (11) verstellbares Distanzelement (12). Im Bereich der in lotrechter Richtung unteren Ausdehnung des Distanzelementes (12) ist ein Fuß (13) angeordnet. Das Distanzelement (12) ist einerseits über ein Schwenkgelenk (14) und andererseits über ein Stellelement (15) mit dem Basiselement (11) verbunden.

Beim dargestellten Ausführungsbeispiel besteht das Schwenkgelenk (14) aus einem mit dem Basiselement (11) verschraubten Bolzen (16), auf dem das Distanzelement (12) beweglich aufsitzt.

Unterhalb des Basiselementes (11) ist eine Wägezelle (17) angeordnet, die mit einem Auflager (18) für das Auflageelement (2) gekoppelt ist, um die zu messende Gewichtskraft zu übertragen. Gemäß einer anderen Ausführungsform kann die Wägezelle (17) auch oberhalb des Basiselementes (11) angeordnet sein.

Eingezeichnet sind in Fig. 3 auch eine Wirklinie (19), die die Richtung der vom Auflageelement (2) auf das Auflager (18) übertragenen Gewichtskraft anzeigt und eine Wirklinie (20), die die Richtung der vom Fuß (13) auf die Aufstellfläche übertragene Kraft veranschaulicht. Es ist zu erkennen, daß gemäß der Ausführungsform in Fig. 3 die Wirklinien (19, 20) im Wesentlichen die gleiche Richtung aufweisen und entlang einer gemeinsamen Wirkachse angeordnet sind. Durch diese Anordnung der Wirklinie (19, 20) erfolgt nahezu keine Kraftübertragung vom Tragelement (6) zum Rahmen (10).

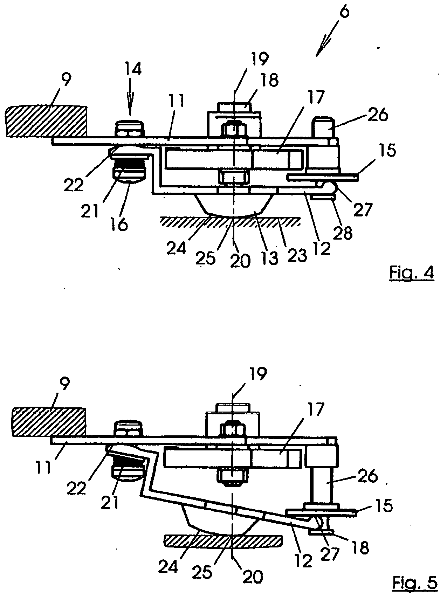

Fig. 4 veranschaulicht weitere Einzelheiten des Tragelementes (6). Zu erkennen ist beispielsweise, daß im Bereich des Schwenkgelenkes (14) auf dem Bolzen (16) ein elastisches Element (21) angeordnet ist, das einerseits eine Verschwenkbarkeit des Distanzelementes (12) relativ zum Basiselement (1) und andererseits eine spielfrei Halterung des Distanzelementes (12) unterstützt. Das Distanzelement (12) besitzt im Bereich des Schwenkgelenkes (14) im Bereich seiner dem Basiselement (11) zugewandten Oberfläche eine gewölbte Außenkontur (22), die ein Abrollen auf dem Basiselement (11) unterstützt.

Ebenfalls ist aus Fig. 4 zu erkennen, daß der Fuß (13) im Bereich seiner der Aufstellfläche (23) zugewandten Ausdehnung eine nach außen gewölbte Kontur (24) aufweist. Diese Kontur sorgt dafür, daß ein in Fig. 4 gekennzeichneter Auflagepunkt (25) bei einer Verschwenkung des Distanzelementes (12) derart entlang der Kontur (24) wandert, daß die Wirklinien (19, 20) immer im Wesentlichen zusammenfallen.

Das Stellelement (15) kann beispielsweise als ein verstellrad ausgebildet sein, durch das ein Bolzen (26) mit einem Außengewinde in einem Innengewinde des Basiselementes (11) verdreht wird. Hierdurch erfolgt ein vorgebbares Herausdrehen des Bolzens (26) aus dem Basiselement (11) und hierdurch ein Verschwenken des Distanzelementes (12). Relativ zum Bolzen (26) ist das Distanzelement (12) durch ein Auflager (27) und ein Gegenlager (28) derart beweglich geführt, daß die vorgesehenen Schwenkbewegungen durchgeführt werden können.

Fig. 5 zeigt die Anordnung gemäß Fig. 4 nach einem Verdrehen des Bolzens (26) derart, daß der Bolzen (26) weiter nach unten aus dem Basiselement (11) heraussteht. Das Distanzelement (12) wurde hierdurch relativ zum Basiselement (11) verschwenkt. Zu erkennen ist insbesondere, daß aufgrund der Kontur (24) des Fußes (13) der Auflagepunkt (25) auch bei dieser Schwenkpositionierung in einer Verlängerung der Wirklinien (19, 20) angeordnet ist. Eine Einleitung von Momenten oder Biegekräften in den Distanzarm (9) wird hierdurch vermieden.

## Patentansprüche

1. Vorrichtung zum Wiegen, die eine Auflagefläche (3) für das zu wiegende Objekt aufweist und bei der die Auflagefläche (3) von einem Auflageelement (2) bereitgestellt ist, das von mindestens zwei Tragelementen (6) gegenüber einer Aufstellfläche abstützbar ist, und bei der die Tragelemente (6) relativ zueinander identisch ausgebildet sind, und bei der jedes der Tragelemente (6) von einem Distanzarm (9) mit einem Rahmen (10) verbunden ist und jedes der Tragelemente (6) mindestens eine Wägezelle (17) zur Gewichtserfassung sowie eine Nivelliereinrichtung zur Höhenjustage aufweist, **dadurch gekennzeichnet, dass** das Tragelement (6) ein Basiselement (11) sowie ein relativ zum Basiselement (11) positionierbares Distanzelement (12) aufweist, dass das Distanzelement (9) mit einem Fuß (13) versehen ist, und dass der Fuß (13) im Bereich seiner dem Distanzelement (12) abgewandten Ausdehnung eine Kontur (24) derart aufweist, dass in einer Mehrzahl von Schwenkpositionierungen des Distanzelementes (12) relativ zum Basiselement (11) eine Wirklinie (19), die einer Kraftübertragungsrichtung vom Auflageelement (2) zum Basiselement (11) entspricht und einer Wirklinie (20), die einer Kraftübertragung vom Fuß (13) zu einer Aufstellfläche (23) entspricht, im Wesentlichen gleichgerichtet und ineinander fallend angeordnet sind.

2. Vorrichtung nach Anspruch 1, **dadurch gekennzeichnet, dass** das Distanzelement (12) relativ zum Basiselement (11) verschwenkbar gelagert ist.

3. Vorrichtung nach einem der Ansprüche 1 oder 2, **dadurch gekennzeichnet, dass** im Bereich eines das Distanzelement (12) mit dem Basiselement (11) verbindenden Schwenkgelenkes (14) ein elastisches Element (21) angeordnet ist.

4. Vorrichtung nach einem der Ansprüche 1 bis 3, **dadurch gekennzeichnet, dass** das Distanzelement von einem Stellelement (15) relativ zum Basiselement (11) positionierbar ist.

5. Vorrichtung nach einem der Ansprüche 3 oder 4, **dadurch gekennzeichnet, dass** das Stellelement (15) relativ zum Fuß (13) gegenüberliegend zum Schwenkgelenk (14) angeordnet ist.

6. Vorrichtung nach einem der Ansprüche 1 bis 5, **dadurch gekennzeichnet, dass** vier Tragelemente (6) mit dem Rahmen (10) verbunden sind.

7. Vorrichtung nach einem der Ansprüche 1 bis 6, **dadurch gekennzeichnet, dass** die Distanzarme (9) relativ zum Rahmen (10) positionierbar angeordnet sind.

## Claims

1. A device for weighing, which has a bearing surface (3) for the object to be weighed and in which the bearing surface (3) is provided by a bearing element (2) which can be supported with respect to an installation surface by at least two support elements (6), and in which the support elements (6) are of an identical construction to one another and in which each of the support elements (6) is connected to a frame (10) by a spacer arm (9) and each of the support elements (6) has at least one weighing cell (17) for determining weight and a levelling device for vertical adjustment, **characterised in that** the support element (6) has a base element (11) and a spacer element (12) which can be positioned relative to the base element (11), **in that** the spacer element (9) is provided with a foot (13), and **in that**, in the region of its extent which is remote from the spacer element (12), the foot (13) has a contour (24) such that, in a plurality of pivotal positions of the spacer element (12) relative to the base element (11), a line of action (19) which corresponds to a force transmission from the bearing element (2) to the base element (11) and a line of action (20) which corresponds to a force transmission from the foot (13) to an installation surface (23) are arranged substantially in in a common direction and coincidentally with one another.

2. A device according to Claim 1, **characterised in that** the spacer element (12) is mounted such that it is pivotable relative to the base element (11).

3. A device according to one of Claims 1 or 2, **characterised in that** a resilient element (21) is arranged in the region of a pivot joint (4) connecting the spacer element (12) to the base element (11).

4. A device according to one of Claims 1 to 3, **characterised in that** the spacer element can be positioned relative to the base element (11) by a setting element (15).

5. A device according to one of Claims 3 or 4, **characterised in that** the setting element (15) is arranged opposite the pivot joint (14) relative to the foot (13).

6. A device according to one of Claims 1 to 5, **characterised in that** four support elements (6) are connected to the frame (10).

7. A device according to one of Claims 1 to 6, **characterised in that** the spacer arms (9) are arranged such that they can be positioned relative to the frame (10).

## Revendications

1. Dispositif de pesage qui est doté d'une surface de pose (3) pour l'objet à peser, et dans lequel la surface de pose (3) est formée par un élément de pose (2) qui peut prendre appui sur une surface de support, par au moins deux éléments porteurs (6), et dans lequel les éléments porteurs (6) sont conçus identiquement l'un à l'autre, et dans lequel chacun des éléments porteurs (6) est relié au cadre (10) par un bras d'espacement (9) et chacun des éléments porteurs (6) étant doté d'au moins une cellule de pesage (17) pour la saisie du poids ainsi que d'un dispositif de mise à niveau pour le réglage de la hauteur,
**caractérisé en ce que** l'élément porteur (6) est doté d'un élément de base (11) ainsi que d'un l'élément d'espacement (12), qui peut être positionné par rapport à l'élément de base (11), q u e l'élément d'espacement (9) est pourvu d'un pied (13), et q u e le pied (13) est doté, dans sa section de son étendue opposée à l'élément d'espacement (12), d'un contour (24) tel que, dans une pluralité de positionnements par pivotement de l'élément d'espacement (12) par rapport à l'élément de base (11), une ligne d'action (19), qui correspond à une direction de transmission de force de l'élément de pose (2) à l'élément de base (11), et une ligne d'action (20), qui correspond à une transmission de force du pied (13) à une surface de pose (23), soient disposées sensiblement dans la même direction et plongent l'une dans l'autre.

2. Dispositif selon la revendication 1, **caractérisé en ce que** l'élément d'espacement (12) est monté à pivotement par rapport à l'élément de base (11).

3. Dispositif selon l'une des revendications 1 ou 2,
**caractérisé en ce que**, dans la zone d'une l'articulation de pivotement (14), qui relie l'élément d'espacement (12) à l'élément de base (11), est agencé un élément élastique (21).

4. Dispositif selon l'une des revendications 1 à 3,
**caractérisé en ce que** l'élément d'espacement peut être positionné par rapport à l'élément de base (11) au moyen d'un élément de réglage (15).

5. Dispositif selon l'une des revendications 3 ou 4,
**caractérisé en ce que** l'élément de réglage (15) est disposé, par rapport au pied (13), à l'opposé de l'articulation de pivotement (14).

6. Dispositif selon l'une des revendications 1 à 5,
**caractérisé en ce que** les quatre éléments de support (6) sont reliés au cadre (10).

7. Dispositif selon l'une des revendications 1 à 6,
**caractérisé en ce que** les bras d'espacement (9) peuvent être positionnés par rapport au cadre (10).
